# EUROPÄISCHE PATENTANMELDUNG

(11) **EP 1 775 752 A2**
(43) Veröffentlichungstag der Anmeldung: **18.04.2007**
(21) Anmeldenummer: 06021571.2
(22) Anmeldetag: 13.10.2006
(51) Int. Cl.: H01J 35/18

(54) **Herstellung eines Elektronenaustrittsfensters mittels eines Ätzprozesses**

(30) Priorität: 15.10.2005 DE 102005049382
(71) Anmelder: Burth, Dirk, Dr., 85235 Odelzhausen (DE)
(72) Erfinder: Burth, Dirk, 85235 Odelzhausen (DE); Burth, Iris, 85235 Odelzhausen (DE)
(74) Vertreter: Lehmann, Horst Michael

(57) **Zusammenfassung**

Es wird ein Verfahren zur Herstellung eines Elektronenaustrittsfensters für einen Elektronenstrahlbeschleuniger beschrieben. Das Verfahren umfasst das Verringern der Foliendicke einer Folie aus Titan oder Glas durch Ätzen der Folie mit einer Ätzlösung.

## Beschreibung

Die Erfindung betrifft ein Verfahren zur Herstellung eines Elektronenaustrittsfensters. Des Weiteren betrifft die Erfindung ein Elektronenaustrittsfenster sowie einen Elektronenstrahlbeschleuniger.

Es ist Aufgabe der Erfindung, ein Elektronenaustrittsfenster zur Verfügung zu stellen, das einerseits eine geringe Dicke aufweist und andererseits mit hinreichend großen Abmessungen für die jeweiligen Anforderungen hergestellt werden kann.

Das erfindungsgemäße Verfahren zur Herstellung eines Elektronenaustrittsfensters für einen Elektronenstrahlbeschleuniger umfasst einen Schritt des Verringerns der Foliendicke einer Folie aus Titan oder Glas. Erfindungsgemäß wird die Foliendicke durch Ätzen der Folie mit einer Ätzlösung verringert.

Elektronenaustrittsfenster für Elektronenstrahlbeschleuniger müssen zwei zueinander konträre Anforderungen erfüllen: zum einen muss die Dicke des Elektronenaustrittsfensters hinreichend klein sein, um die austretenden Elektronen nicht zu stark abzubremsen. Andererseits muss das Elektronenaustrittsfenster der Druckdifferenz zwischen dem Innenraum des Elektronenstrahlbeschleunigers und dem Atmosphärendruck der Umgebungsluft standhalten können. Generell kann durch den Einsatz dünner Elektronenaustrittsfenster die zur Beschleunigung der Elektronen erforderliche Beschleunigungsspannung verringert werden, was erhebliche Kostenvorteile zur Folge hat. Infolge der verringerten Beschleunigungsspannung können beispielsweise die verwendeten Trafos kleiner dimensioniert werden. Darüber hinaus verringert sich beispielsweise auch der bauliche Aufwand in Bezug auf die Abschirmung von Röntgenstrahlung, die innerhalb des Elektronenstrahlbeschleunigers entsteht.

Ein Elektronenaustrittsfenster absorbiert umso weniger Energie, je dünner es ausgebildet ist. Dadurch kommt es bei der Verwendung eines dünnen Elektronenaustrittsfensters nur zu einer geringen Erwärmung, und insofern kann der Elektronenstrahlbeschleuniger bei Verwendung eines dünnen Elektronenaustrittsfensters mit einer höheren Dosisleistung betrieben werden. Ein weiterer Vorteil bei der Verwendung dünnerer Elektronenaustrittsfenster ist, dass infolge der geringeren Beschleunigungsspannung das Substrat, auf dem die Elektronen auftreffen, weniger stark geschädigt wird, als dies bei Verwendung höherer Beschleunigungsspannungen der Fall wäre.

Man hat deshalb versucht, dünne Metallfolien, die durch Walzen hergestellt wurden, als Elektronenaustrittsfenster zu verwenden. Mit Hilfe eines Walzverfahrens können beispielsweise Titanfolien mit einer Dicke von ca. 10 bis 12 µm hergestellt werden. Bei dem Versuch, noch dünnere Titanfolien durch Walzen zu erzeugen, stößt man jedoch an die Grenzen dieses Verfahrens. Um eine Titanfolie auf eine Dicke von unter 10 µm auszuwalzen, muss die Titanfolie hohen mechanischen Belastungen ausgesetzt werden, die zu Rissen und Löchern in der Titanfolie führen. Derartige Titanfolien sind als Elektronenaustrittsfenster nicht brauchbar. Allenfalls können mit Hilfe eines Walzvorgangs kleinformatige Folienstücke hergestellt werden. Man ist aber gerade an größeren Elektronenaustrittsfenstern interessiert, deren Größe den Dimensionen der heute in der Druck- und Veredelungstechnik verwendeten Maschinenbreiten entsprechen.

Bei einer anderen aus dem Stand der Technik bekannten Vorgehensweise wird auf einen Träger eine Oxid-, Nitrid- oder Carbidschicht von gleichmäßiger Dicke aufgebracht. Dies kann beispielsweise durch Oxidieren des Trägers oder durch Aufdampfen der entsprechenden Schicht geschehen. Anschließend wird bei diesem Verfahren der Träger, der beispielsweise aus Metall oder Silizium bestehen kann, vollständig weggeätzt. Die übrigbleibende Oxid-, Nitrid- oder Carbidschicht kann dann als Elektronenaustrittsfenster eingesetzt werden. Nachteil dieses Verfahrens ist, dass beim Erzeugen der Oxid-, Nitrid- und Carbidfilme kleine Löcher (sogenannte "Pinholes") entstehen. Bisher konnten mit derartigen Techniken nur Elektronenaustrittsfenster mit kleinen Dimensionen, beispielsweise mit Abmessungen von weniger als 5 cm, erfolgreich hergestellt werden. Ein weiterer Nachteil dieser Verfahren ist, dass die Erzeugung der zusätzlichen Oxid-, Nitrid- oder Carbidschicht auf dem Träger aufwendig und teuer ist.

Bei dem erfindungsgemäßen Verfahren wird die Dicke einer vorgegebenen Titan- oder Glasfolie durch Ätzen mit einer Ätzlösung kontrolliert verringert. Im Unterschied zu den Lösungen des Stands der Technik dient die Titan- oder Glasfolie nicht als Träger für eine darauf aufgebrachte Schicht, die dann später das eigentliche Fenstermaterial darstellt, sondern das Titan oder das Glas selbst stellt das Fenstermaterial dar. Bei Ätzen geht es also nicht um die vollständige Entfernung eines Trägers, sondern um die kontrollierte Verringerung der Schichtdicke des eigentlichen Fenstermaterials.

Bei dem erfindungsgemäßen Herstellungsverfahren werden die an sich schon sehr dünne Titan- oder Glasfolie nicht vollständig, sondern nur teilweise abgetragen. Man würde hier erwarten, dass beim Ätzen der an sich schon sehr dünnen Folien infolge des Ätzprozesses Unebenheiten, Inhomogenitäten und die Bildung von Löchern zu erwarten ist. Nichts von alledem ist der Fall. Es hat sich herausgestellt, dass sich bei geeigneter Wahl der Konzentration der Ätzlösung eine sehr gleichmäßige Prozessführung erreichen lässt, bei der die Dicke der vorgegebenen Titan- oder Glasfolie homogen als Funktion der Zeit verringert wird. Risse, Löcher oder mechanische Instabilitäten treten bei geeigneter Prozessführung nicht auf. Als Ergebnis des erfindungsgemäßen Verfahrens wird eine Titan- oder Glasfolie mit einer Dicke im Mikrometerbereich erhalten, die in der Lage ist, mechanischen Belastungen und insbesondere dem Druckunterschied in einem Elektronenstrahlbeschleuniger standzuhalten. Dies liegt daran, dass es sich bei dem Titan oder Glas um ein homogenes Material ohne innere Spannungen handelt, welches während des Ätzprozesses gleichmäßig abgetragen wird. Titan und Glas sind wegen ihrer Beständigkeit gegen Strahlung und Korrosion bevorzugte Materialien für Elektronenaustrittsfenster.

Mit Hilfe des erfindungsgemäßen Verfahrens können zuverlässig funktionierende Elektronenaustrittsfenster mit einer Dicke im Mikrometerbereich mit beliebigen Abmessungen hergestellt werden. Da während des Herstellungsprozesses keinerlei Löcher oder Risse in der Folie entstehen, unterliegt die Herstellung der erfindungsgemäßen Fenster keinen größenmäßigen Beschränkungen. Durch Einsatz der erfindungsgemäßen Herstellungsverfahrens können daher Elektronenstrahlbeschleuniger realisiert werden, die in der Lage sind, die gesamte Bahnbreite gängiger Druck- und Bahnveredelungsmaschinen abzudecken.

Gemäß einer vorteilhaften Ausführungsform der Erfindung wird die Folie mit einer sauren fluoridhaltigen Lösung oder mit Flusssäure geätzt. Gemäß einer weiteren vorteilhaften Ausführungsform liegt die Konzentration der Flusssäure zwischen 0,1 % und 10 %. Die Konzentration der Flusssäure bestimmt die Geschwindigkeit, mit der die Titan- oder Glasfolie abgeätzt wird. Wählt man die Konzentration zu hoch, so verläuft der Ätzvorgang zu schnell, und es bilden sich Löcher in der Folie. Mit einer zu gering konzentrierten Ätzlösung dauert der Ätzvorgang dagegen zu lang.

Gemäß einer vorteilhaften Ausführungsform der Erfindung wird die Dicke der Folie nach dem Ätzen durch die Einwirkzeit der Ätzlösung und die Konzentration der Ätzlösung bestimmt. Beispielsweise kann die zum Abtragen von 1 µm Titan oder Glas erforderliche Zeit empirisch ermittelt werden und später als Grundlage zur Ermittlung der Einwirkzeit herangezogen werden.

Es ist von Vorteil, die Folie vor dem Ätzen zu reinigen und zu entfetten. Des Weiteren ist es von Vorteil, die Folie nach dem Ätzen mit Natronlauge und/oder mit Wasser zu spülen. Gemäß einer weiteren vorteilhaften Ausführungsform werden nach dem Ätzen verbliebene Verbindungen mit einer Lösung aus Schwefelsäure oder einem Gemisch aus Schwefelsäure und Wasserstoffperoxid entfernt. Mit diesen Chemikalien können Fluoridsalze, die auf der Oberfläche des geätzten Elektronenaustrittsfensters verblieben sind, entfernt werden. Diese Fluoridsalze müssen entfernt werden, da sie später zu Korrosion führen würden.

Es ist von Vorteil, wenn die Folie in einem Rahmen fixiert wird. Dadurch kann verhindert werden, dass durch mechanische Belastungen Knicke oder Falten in der Folie entstehen. Darüber hinaus ist es von Vorteil, wenn die Folie in dem Rahmen geätzt wird. Hierzu kann beispielsweise der Rahmen mit Ätzlösung befüllt werden. Darüber hinaus ist es von Vorteil, wenn die Folie in dem Rahmen transportiert wird. Vorzugsweise kann die Folie auch zusammen mit dem Rahmen in den Elektronenstrahlbeschleuniger eingebaut werden, so dass während des gesamten Bearbeitungsvorgangs eine stabile mechanische Fixierung der Folie gegeben ist. Vorzugsweise handelt es sich bei dem Rahmen bereits um eine Stützkonstruktion zur Halterung der Folie im Elektronenstrahlbeschleuniger.

Gemäß einer vorteilhaften Ausführungsform wird die Foliendicke der Folie durch gleichzeitiges Ätzen beider Seiten der Folie verringert. Pro Seite muss bei dieser Vorgehensweise nur eine geringe Menge an Material abgetragen werden, so das die Prozesstoleranzen bei dieser Vorgehensweise weniger streng sind als bei einem Ätzen von nur einer Seite.

Gemäß einer weiteren vorteilhaften Ausführungsform wird die Folie aus Titan oder Glas nur selektiv an vorbestimmten Stellen geätzt. An diesen ausgewählten Stellen wird die Foliendicke verringert, während die Dicke der Folie an allen übrigen Stellen unverändert bleibt. Durch selektives Ätzen der Folie kann die Stabilität des erhaltenen Elektronenaustrittsfensters verbessert werden. Darüber hinaus kann die entstehende Wärme durch die dickeren Strukturen besser abgeleitet werden. Insbesondere ist es von Vorteil, wenn die Foliendicke der Folie entsprechend den Aussparungen einer Stützkonstruktion verringert wird. Die Folie wird später zusammen mit der Stützkonstruktion in den Elektronenstrahlbeschleuniger eingebaut. Es ist daher lediglich erforderlich, die Schichtdicke an den Aussparungen der Stützkonstruktion zu verringern, wohingegen die Foliendicke an den gestützten Stellen unverändert bleiben kann.

Gemäß einer vorteilhaften Ausführungsform wird das Verfahren zur Herstellung von Elektronenaustrittsfenstern mit beliebiger Größe eingesetzt. Beispielsweise kann das erzeugte Elektronenaustrittsfenster mehr als 10 cm lang und mehr als 2 cm breit sein. Mit derartigen Elektronenaustrittsfenstern lassen sich Elektronenstrahlbeschleuniger bauen, die mit einem einzigen Elektronenaustrittsfenster die gesamte Breite einer Bahn in einer Druckmaschine oder einer Veredelungsmaschine abdecken.

Gemäß einer vorteilhaften Ausführungsform der Erfindung handelt es sich bei der Folie um eine Titanfolie.

Gemäß einer weiteren vorteilhaften Ausführungsform wird zunächst die Oxidschicht der Titanfolie durch Ätzen mit Flusssäure oder mit einem Gemisch aus Säure und einem Fluoridsalz entfernt. Eine derartige Oxidschicht, die typischerweise eine Dicke von mehreren Nanometern aufweist, bildet sich beim Kontakt der Titanfolie mit dem Luftsauerstoff. Erst wenn diese Passivierungsschicht abgeätzt ist, kann mit dem Abtragen des Titans begonnen werden. Vorzugsweise wird auch das Titan mit der zum Abätzen der Oxidschicht verwendeten Flusssäure (bzw. dem Fluoridsalz-Säure-Gemisch) abgeätzt. Alternativ kann das Titan nach Entfernen der Passivierungsschicht aber auch mit einer anderen Säure, beispielsweise mit Salzsäure oder Schwefelsäure, geätzt werden.

Es ist von Vorteil, wenn die Verringerung der Foliendicke der Titanfolie während des Ätzvorgangs überwacht wird. Hierzu kann beispielsweise der elektrische Widerstand der Titanfolie gemessen werden. Alternativ kann z. B. der elektrische Widerstand der Ätzlösung verfolgt werden. Bei einer weiteren bevorzugten Ausführungsform wird die Konzentration der Säure oder der gelösten Titanverbindungen durch spektrometrische Bestimmung der Konzentration von geeigneten Indikatoren bestimmt.

Gemäß einer bevorzugten Ausführungsform handelt es sich bei der Folie um eine Glasfolie. Der Vorteil bei Verwendung von Glas oder SiO₂ als Fenstermaterial liegt in der geringen Dichte, die eine weitere Verringerung der Beschleunigungsspannung ermöglicht.

Dabei ist es insbesondere von Vorteil, wenn die Glasfolie durch thermisches Aufspritzen, Aufschmelzen oder Aufgießen einer Glasschicht auf einen Metallträger, oder durch Aufkleben einer Glasplatte auf einen Metallträger erzeugt wird. Mit Hilfe dieser Techniken lassen sich Glasschichten mit Dicken zwischen beispielsweise 50 µm und 150 µm in beliebiger Größe herstellen. Derartige Glasschichten eignen sich gut als Ausgangsmaterial für den erfindungsgemäßen Ätzprozess. Insbesondere ist es von Vorteil, wenn die Dicke der so erzeugten Glasschicht vor dem erfindungsgemäßen Ätzvorgang mechanisch verringert wird, beispielsweise durch Schleifen, Polieren oder Elektropolieren.

Ein erfindungsgemäßer Elektronenstrahlbeschleuniger umfasst eine Kathode oder einen Glühfaden, eine Beschleunigungsanode sowie eine Hochspannungsquelle zur Erzeugung einer Beschleunigungsspannung, die zwischen der Kathode und der Beschleunigungsanode anliegt. Darüber hinaus umfasst der Elektronenstrahlbeschleuniger ein Elektronenaustrittsfenster, das entsprechend dem oben beschriebenen Verfahren hergestellt ist. Durch Verwendung eines dünnen Elektronenaustrittsfensters wird die thermische Belastung des Fensters verringert. Dadurch kann der Elektronenstrahlbeschleuniger mit höherer Dosisleistung arbeiten.

Gemäß einer bevorzugten Ausführungsform ist die Beschleunigungsspannung kleiner oder gleich 70 kV. Wegen der geringeren Dicke des Elektronenaustrittsfensters werden die Elektronen beim Durchdringen des Elektronenaustrittsfensters weniger stark geschwächt, und insofern kann die Beschleunigungsspannung abgesenkt werden. Dadurch kann der zur Erzeugung der Beschleunigungsspannung benötigte Transformator kleiner und kostengünstiger ausgelegt werden. Infolge der geringeren Beschleunigungsspannung sinken auch die Anforderungen an die erforderliche Abschirmung, die zum Schutz von hochenergetischer Strahlung erforderlich ist. Insbesondere kann die Abschirmung kleiner und kompakter ausgelegt werden. Die Verwendung einer verringerten Beschleunigungsspannung ist insbesondere dann von Vorteil, wenn der Elektronenstrahlbeschleuniger zur Härtung von Auftragsschichten eingesetzt wird. Wegen der geringeren Beschleunigungsspannung wird der Großteil der Elektronen von der Auftragsschicht absorbiert, so dass das darunter liegende Substrat weniger stark geschädigt wird.

Insbesondere ist es von Vorteil, wenn der Elektronenstrahlbeschleuniger zur Elektronenstrahlhärtung von Lacken, Beschichtungsmaterialien, Druckfarben, Klebstoffen sowie zur Nachvernetzung von Kunststoffen eingesetzt wird.

Nachfolgend wird die Erfindung anhand mehrerer in der Zeichnung dargestellter Ausführungsbeispiele weiter beschrieben. Es zeigen:
Fig. 1 zwei verschiedene Ausführungsformen eines Elektronenstrahlbeschleunigers;
Fig. 2 die Penetration der beschleunigten Elektronen durch die durchstrahlten Schichten für zwei verschiedene Beschleunigungsspannungen;
Fig. 3 den erfindungsgemäßen Herstellungsprozess für Elektronenaustrittsfenster;
Fig. 4 verschiedene Möglichkeiten zur Durchführung des Ätzprozesses;
Fig. 5 die Fixierung des Elektronenaustrittsfensters in einer Rahmenvorrichtung und den Einbau des Elektronenaustrittsfensters mit dieser Rahmenvorrichtung in einen Elektronenstrahlbeschleuniger; und
Fig. 6 die Herstellung eines Elektronenaustrittsfensters aus Glas.

Elektronenstrahlbeschleuniger sind Geräte, bei denen Elektronen mit hoher Spannung beschleunigt werden. Die Elektronenbeschleuniger werden technisch für verschiedene Zwecke eingesetzt wie beispielsweise beim Elektronenstrahlschweißen, zum Entkeimen oder zum Härten von Lacken, Beschichtungen, Druckfarben oder Klebstoffen.

Die für die letzteren Anwendungen eingesetzten Elektronenbeschleuniger, meist Elektronenstrahlbeschleuniger genannt, sind aufgebaut analog zu einer Braunschen Röhre. Es liegt eine Glühkathode vor, aus der bei hoher Temperatur Elektronen freigesetzt werden, die über ein elektrisches Feld beschleunigt und mittels Magnet- oder elektrischen Feld an die gewünschte Position abgelenkt werden. Damit die Elektronen ungehindert beschleunigt werden können, werden die beschriebenen Geräteteile der Braunschen Röhre im Unterdruck von weniger als 10⁻⁴ bar betrieben. Die beschleunigten Elektronen müssen beim Härten von Beschichtungen oder Klebstoffmassen aus der Braunschen Röhre austreten können. Damit dies effizient möglich ist, wird meist ein Fenstermaterial aus einer 10 bis 12 µm dünnen Titanfolie verwendet, das für Elektronen noch durchgängig ist. Das aus dem Fenstermaterial gebildete Elektronenaustrittsfenster stellt damit eine Trennstelle zwischen Atmosphäre außen und Vakuum (Unterdruck kleiner als 10⁻⁴ bar) dar.

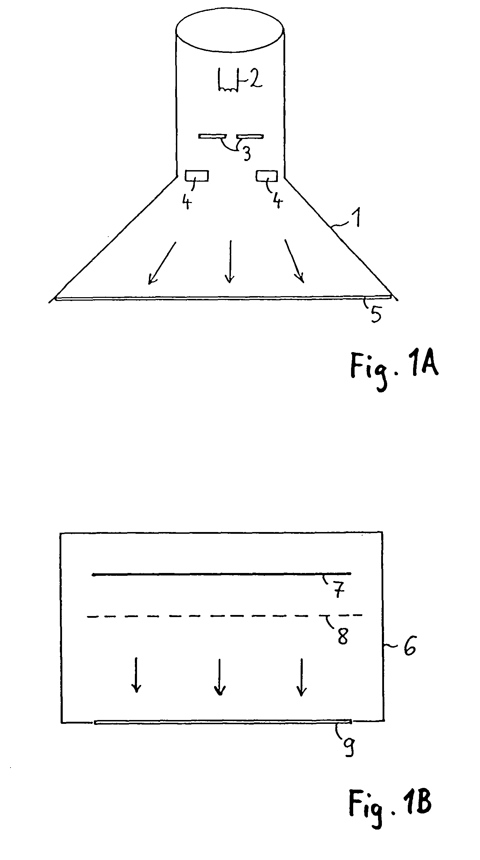

In Fig. 1A und Fig. 1B sind zwei verschiedene Typen von Elektronenstrahlbeschleunigern gezeigt. Innerhalb des Gehäuses 1 des in Fig. 1A gezeigten Elektronenstrahlbeschleuniger sind eine Glühkathode 2 und eine Beschleunigungsanode 3 angeordnet. Zwischen der Glühkathode 2 und der Beschleunigungsanode 3 liegt eine Beschleunigungsspannung an, welche die aus der Glühkathode 2 ausgetretenen Elektronen beschleunigt. Entlang des Strahlverlaufs der Elektronen sind Ablenkmagnete 4 angeordnet, die den Elektronenstrahl aufweiten. Die beschleunigten Elektronen verlassen den Elektronenstrahlbeschleuniger durch das Elektronenaustrittsfenster 5.

Im Gehäuse 6 des in Fig. 1B gezeigten Elektronenstrahlbeschleunigers sind ein Glühfaden 7 sowie eine Beschleunigungsanode 8 angeordnet. Zwischen dem Glühfaden 7 und der Beschleunigungsanode 8 liegt eine Beschleunigungsspannung zur Beschleunigung der aus dem Glühfaden ausgetretenen Elektronen an. Die beschleunigten Elektronen verlassen den Elektronenstrahlbeschleuniger durch das Elektronenaustrittsfenster 9.

Der gesamte Elektronenstrahlbeschleuniger, als auch der Bereich, in dem die Bestrahlung eines Substrats stattfindet, ist mit Blei ummantelt. Dies ist als Schutz vor Röntgenstrahlung erforderlich, die beim Abbremsen der Elektronen im Prozess entsteht.

Die verwendete Beschleunigungsspannung ist dafür verantwortlich, wie energiereich die durch die abgebremsten Elektronen erzeugte Röntgenstrahlung ist. Je höher die Beschleunigungsspannung, desto energiereicher ist die Röntgenstrahlung und entsprechend dicker muss der für den Strahlenschutz verwendete Bleimantel ausgelegt sein.

Die Elektronenstrahlhärtung (im folgenden als ESH bezeichnet) im Bereich von Lacken, Beschichtungsmaterialien, Druckfarben und Klebstoffen hat gegenüber anderen Härtungsverfahren, wie UV-Härtung, den Vorteil, dass besonders harte und chemikalienbeständige Schichten aufgrund der bei der ESH erzielten hohen chemischen Vernetzung entstehen. Weiterhin ist bei der Elektronenstrahlhärtung die Durchhärtung sehr hoher Foliendicken möglich, es können Substrate durchstrahlt werden und die Pigmentierung von Lacken bzw. Druckfarben bereiten kaum Problem beim Aushärten. Ein weiterer Vorteil gegenüber UV-härtenden Systemen ist, dass kein teurer Photoinitiator verwendet werden muss.

Die Nachteile des Elektronenstrahlbeschleuniger liegt in den sehr hohen Anschaffungskosten. Diese werden wesentlich bestimmt durch die sehr hohen Kosten für den Hochspannungstrafo zur Erzeugung von Spannungen von größer oder gleich 80 kV. Die hohen Kosten für die Trafos beruhen darauf, dass Trafos mit einer solchen Leistung nur als Einzelstücke hergestellt werden. Trafos, die Spannungen bis 70 kV liefern sind im Vergleich bedeutend günstiger, da diese in hoher Stückzahl z.B. für Röntgengeräte verwendet werden. Ein weiterer nicht unerheblicher Kostenpunkt ist die aufwendige Bleiabschirmung. Auch hier sind die Kosten abhängig von der Höhe der verwendeten Beschleunigungsspannung.

Die Elektronenbeschleunigungsspannung bestimmt, wie tief Elektronen in die zu härtenden Schichten eindringen.

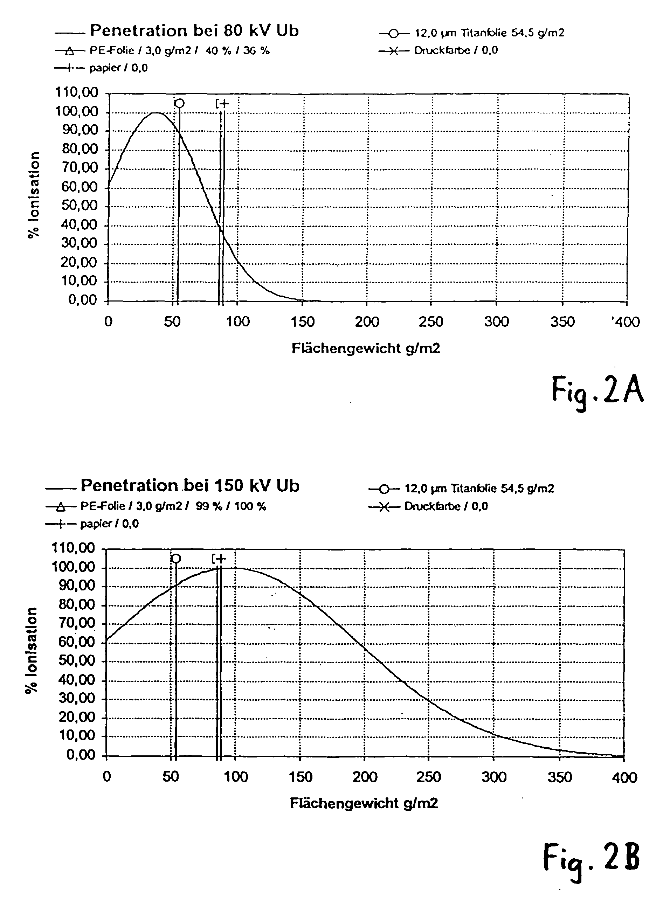

Die Elektroneneindringtiefe ist in Fig. 2A und 2B dargestellt. Fig. 2A zeigt eine Penetrationskurve von Elektronen als Funktion des Flächengewichts der durchstrahlten Schicht bzw. der durchstrahlten Schichten für den Fall einer Beschleunigungsspannung von 80 kV. Fig. 2B zeigt demgegenüber eine Penetrationskurve von Elektronen, welche mit einer Beschleunigungsspannung von 150 kV beschleunigt wurden.

Es ist ersichtlich, dass die Elektronen durch alle Materialien abgebremst werden, die sich auf deren Flugbahn befinden. Bei einer Standard-ESH-Anlage erfolgt die Abbremsung als erstes durch das Elektronenaustrittfenster, zweitens den Luftspalt zwischen Beschichtungsmaterial und dem Austrittfenster und als weiteres der Beschichtung.

Ein wesentlicher Anteil zum Betrag der minimalen Beschleunigungsspannung wird durch die Dicke und die Dichte des verwendeten Elektronenaustrittsfenster festgelegt. Bei den bislang verwendeten 10 bis 12 µm dünnen Titanfolien war zur Aushärtung einer 5 µm dicken Druckfarbenschicht eine Mindestspannung von 80 kV erforderlich.

Titanfolien können beispielsweise durch Auswalzen hergestellt werden. Die bei diesem Prozess auf die Titanfolie wirkenden mechanischen Beanspruchungen verhindern, dass die Folie beliebig dünn in größeren Maßen hergestellt werden kann. Bei Dicken von weniger als 10 µm sind nur Folien mit den Maßen 10 x 10 cm kommerziell erhältlich. Ein Elektronenaustrittsfenster für eine ESH-Anlage, die heute bei einer Standardbeschichtungsanlage verwendet wird, erfordert eine Mindestbreite von 1 m. Bei Einsatz einer ESH-Anlage in einer schmalen Etikettendruckmaschine ist eine Mindestbreite des Fenstermaterials von mehr als 25 cm notwendig.

Gemäß einer ersten Ausführungsform der Erfindung wird eine Titanfolie mit einer Dicke von weniger als 10 µm als Elektronenaustrittsfenster verwendet. Zur Herstellung eines derartigen Elektronenaustrittsfensters wird die Schichtdicke einer als Ausgangsmaterial dienenden dickeren Titanfolie durch Ätzen verringert.

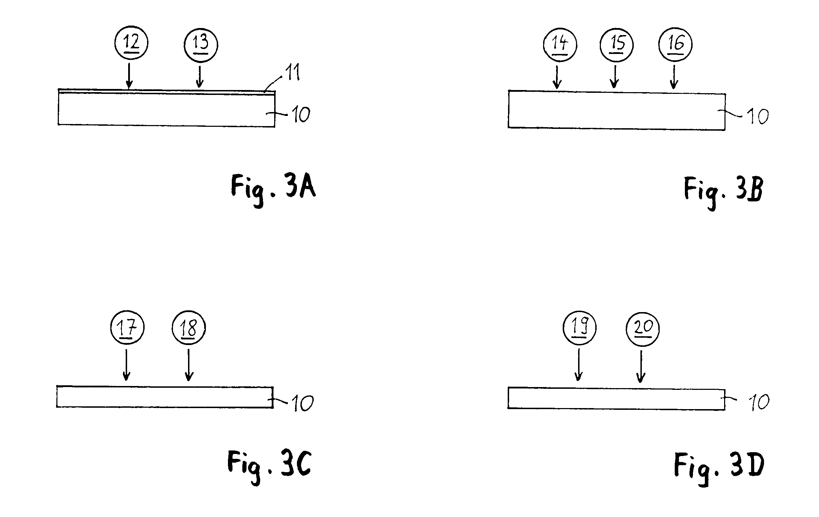

Der Herstellungsprozess für ein erfindungsgemäßes Elektronenaustrittsfenster ist in den Fig. 3A bis 3D dargestellt. Als Ausgangsmaterial wird eine marktübliche, bis zu 50 µm dicke Titanfolie 10 verwendet. Vorzugsweise sollte die Titanfolie 10 vor dem Ätzvorgang gereinigt und entfettet werden. Wegen des Kontakts mit der Umgebungsluft ist die Titanfolie 10 üblicherweise mit einer dünnen Titanoxidschicht 11 überzogen. In einem ersten, in Fig. 3A gezeigten Schritt wird die Titanoxidschicht 11 abgeätzt, indem die Oberfläche der Titanfolie mit einer Ätzlösung behandelt wird. Hierzu kann beispielsweise Flusssäure 12 auf die Oberfläche der Titanfolie aufgebracht werden, wobei die Konzentration der Flusssäure 12 vorzugsweise zwischen 0,1 % und 10 % liegt. Alternativ kann ein Gemisch 13 aus einer beliebigen Säure und einem Fluoridsalz zum Abätzen der Titanoxidschicht 11 verwendet werden. Als Säure kann beispielsweise Schwefelsäure oder Salzsäure eingesetzt werden, und als Fluoridsalz eignen sich beispielsweise Natriumfluorid. Die jeweiligen Konzentrationen der Säure und des Fluoridsalzes liegen vorzugsweise zwischen 1 % und 10 %. Dabei muss das Fluoridsalz nicht in gleichen Konzentrationen wie die Säure verwendet werden.

In Fig. 3B ist die Titanfolie 10 nach dem Abätzen der Titanoxidschicht 11 dargestellt. Um die Schichtdicke der Titanfolie 10 weiter zu verringern, wird die Titanfolie 10 während einer bestimmten Einwirkzeit mit einer Ätzlösung behandelt. Als Ätzlösung kann auch weiter Flusssäure 14 mit einer Konzentration zwischen 0,1 % und 10 % bzw. ein Fluoridsalz-Säure-Gemisch 15 mit einer Konzentration zwischen 0,1 % und 10 % verwendet werden. Die in Fig. 3A zum Abätzen der Titanoxidschicht 11 eingesetzte Säure kann also für den weiteren Ätzprozess verwendet werden. Alternativ kann die Titanfolie 10 nach Entfernung der Titanoxidschicht 11 auch mit einer anderen Säure 16 geätzt werden, beispielsweise mit Salzsäure oder Schwefelsäure. Während des Ätzens der Titanfolie 10 ist eine Gasentwicklung zu beobachten, die auf den beim Abätzen entstehenden Wasserstoff zurückzuführen ist. Je länger die jeweilige Säure auf die Titanfolie 10 einwirkt, umso mehr Material wird abgetragen. Beispielsweise wurde bei Verwendung einer 3%igen HF-Lösung ein Abtragen von 1 µm Titanschicht pro 25 s beobachtet. Eine derartige lineare Abnahme der Schichtdicke als Funktion der Zeit ist allerdings nur dann zu beobachten, wenn die Flusssäure in großem Überschuss relativ zur Titanmenge vorliegt. Ansonsten nimmt die Abätzgeschwindigkeit mit der Zeit ab.

Nachdem die jeweilige Ätzlösung für eine bestimmte Einwirkzeit mit der Titanfolie 10 in Kontakt gebracht wurde, ist genügend Material abgetragen, und die Foliendicke der Titanfolie 10 ist auf den gewünschten Wert reduziert. Zu diesem Zeitpunkt wird der Ätzvorgang gestoppt, und die jeweilige Ätzlösung wird entfernt. Wie in Fig. 3C dargestellt ist, wird die Oberfläche der Titanfolie 10 anschließend einmal oder mehrmals gespült. Zum Spülen der Folie kann beispielsweise halbkonzentrierte Natronlauge 17 verwendet werden, um kleine Restmengen von Säure zu neutralisieren. Auf diese Weise kann der Ätzvorgang zuverlässig gestoppt werden. Alternativ oder zusätzlich kann die Oberfläche der Titanfolie 10 nach dem Ätzen mit Wasser 18 gespült werden. Vorzugsweise wird die Titanfolie 10 nach dem Ätzprozess mehrmals gespült.

In Fig. 3D ist eine weitere Nachbehandlung der geätzten Titanfolie 10 dargestellt, welche dazu dient, verbliebene Titanverbindungen nach dem Ätzvorgang zu entfernen. Hierzu wird die Oberfläche der Titanfolie 10 mit einer Lösung 19 aus Schwefelsäure oder aus einem Gemisch 20 aus Schwefelsäure und Wasserstoffperoxid gespült.

Mit Hilfe des in den Fig. 3A bis 3D gezeigten Herstellungsverfahrens kann eine Titanfolie mit einer Dicke zwischen 1 µm und 9 µm hergestellt werden, welche sich insbesondere als Elektronenaustrittsfenster für einen Elektronenstrahlbeschleuniger eignet. Wegen ihrer geringen Dicke weist die geätzte Titanfolie eine hohe Durchlässigkeit für beschleunigte Elektronen auf. Darüber hinaus ist die geätzte Titanfolie trotz ihrer geringen Dicke in der Lage, der Druckdifferenz zwischen dem Unterdruck im Innenraum des Elektronenstrahlbeschleunigers und dem Atmosphärendruck außerhalb des Elektronenstrahlbeschleunigers standzuhalten. Infolge des gleichmäßig durchgeführten Ätzvorgangs ergibt sich eine homogene Dicke der geätzten Titanfolie. Insbesondere kann bei dem erfindungsgemäßen Herstellungsprozess die Ausbildung von kleinen Löchern (sogenannten Pinholes) oder Rissen vermieden werden.

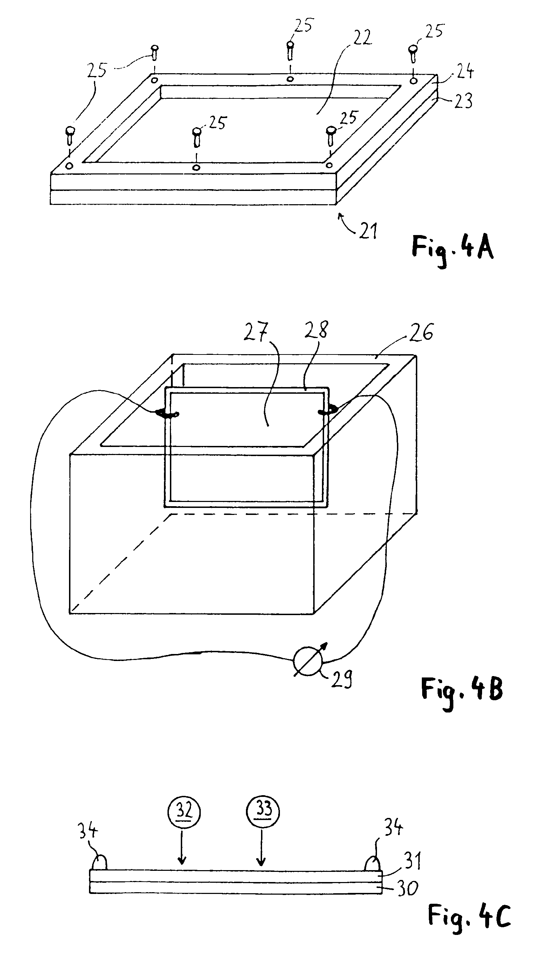

Fig. 4A zeigt eine Rahmeneinheit 21 zur Aufnahme einer Titanfolie 22, welche die Handhabung der dünnen Folie erleichtert und darüber hinaus auch als Ätzwanne zum Ätzen der Titanfolie 22 verwendet werden kann. Die Rahmeneinheit 21 kann beispielsweise aus einem unteren Rahmen 23 und einem oberen Rahmen 24 aufgebaut sein. Zwischen den unteren Rahmen 23 und den oberen Rahmen 24 wird die Titanfolie 22 eingespannt. Zur Abdichtung der Rahmeneinheit 21 kann zusätzlich ein rahmenförmiges Dichtungselement mit eingespannt werden, welches beispielsweise aus Teflon oder Silikon bestehen kann. Der untere Rahmen 23 wird mit dem oberen Rahmen 24 mittels Schraubens 25 verschraubt. Durch Verwendung der Rahmeneinheit 21 kann verhindert werden, dass sich in der Titanfolie 22 Knickstellen bilden, welche ein gleichmäßiges und lochfreies Ätzen der Titanfolie 22 unmöglich machen würden.

Zum Ätzen der Titanfolie 22 wird Flusssäure oder ein Fluoridsalz-Säure-Gemisch von oben in die Rahmeneinheit 21 eingefüllt, um für eine bestimmte Zeitdauer die Oberseite der Titanfolie 22 zu ätzen. Daher wird lediglich die Oberseite der Titanfolie 22 geätzt, während die Unterseite unverändert bleibt. Um eine gleichmäßigere Verringerung der Foliendicke zu erzielen und so die Gefahr der Bildung von Löchern verringern, kann die Rahmeneinheit 21 nach Abschluss des Ätzens der Oberseite umgedreht werden, um in einem nachfolgenden zweiten Schritt auch die Unterseite der Titanfolie 22 zu ätzen. Die Verwendung einer Rahmeneinheit 21 hat den Vorteil, dass der Randbereich der Titanfolie 22 während des Ätzvorgangs von dem Rahmen 23, 24 bedeckt ist und deshalb nicht geätzt wird. Auf diese Weise bleibt nach dem Ätzen ein dicker und stabiler Randbereich bestehen, der den dünneren Innenbereich der Titanfolie 22 stabilisiert. Alternativ zu einem festen Rahmen kann ein Rahmen aus einer Knetmasse, die selbst haftet und abdichtet, aufgebracht werden.

In Fig. 4B ist eine alternative Vorgehensweise für die Durchführung des Ätzprozesses veranschaulicht. Hierzu wird die jeweilige Ätzlösung, also beispielsweise Flusssäure oder ein Fluoridsalz-Säure-Gemisch, in eine säureresistente Ätzwanne 26 eingefüllt. Daraufhin wird die Titanfolie 27 für eine bestimmte Zeitdauer in die Ätzlösung eingetaucht, um sowohl die Unterseite als auch die Oberseite der Titanfolie 27 gleichzeitig zu ätzen. Durch das beidseitige Ätzen der Titanfolie 27 wird die Gefahr der Bildung von Löchern verringert. Wie in Fig. 3A gezeigt, wird beim Ätzen der Titanfolie 27 zunächst die auf beiden Seiten der Titanfolie 27 befindliche Titanoxidschicht abgeätzt. Nach Entfernen der Titanoxidschicht wird das Titan angegriffen, und es beginnt eine Gasentwicklung (Wasserstoff). Dies entspricht dem in Fig. 3B gezeigten Prozessschritt. Während des Ätzvorgangs kann die Titanfolie 27 beispielsweise durch einen Rahmen 28 stabilisiert werden, um die Bildung von Knickstellen und mechanischen Instabilitäten zu verhindern.

Die Dicke der Titanfolie 27 hängt sowohl von der Einwirkzeit als auch von der Konzentration der Ätzlösung ab. Die Verringerung der Dicke als Funktion der Zeit kann beispielsweise empirisch ermittelt werden. Beispielsweise ist bekannt, dass bei Verwendung einer 3%igen HF-Lösung das Abtagen von 1 µm Titanschicht ca. 25 s dauert. Wenn also beispielsweise die Dicke einer Titanfolie 27, die anfänglich eine Dicke von 12 µm aufweist, auf 5 µm reduziert werden soll, so ergibt sich daraus eine Einwirkzeit der Ätzlösung von ca. 175 s. Dies gilt allerdings nur, wenn die Flusssäure in großem Überschuss relativ zur Titanmenge vorliegt. Ansonsten nimmt die Abätzgeschwindigkeit als Funktion der Zeit ab.

Alternativ oder zusätzlich können verschiedene Messmethoden zur Verfolgung der Dicke der Titanfolie eingesetzt werden. Beispielsweise kann, wie in Fig. 4B gezeigt ist, der elektrische Widerstand durch die Titanfolie 27 mit Hilfe eines Widerstandsmessgeräts 29 verfolgt werden. Da der elektrische Widerstand eines Leiters indirekt proportional zu dessen Querschnittsfläche ist, steigt der Widerstand der Titanfolie 27 mit abnehmender Dicke an. Eine weitere Möglichkeit ist, den Widerstand der Ätzlösung als Funktion der Zeit zu verfolgen. Im Verlauf des Ätzprozesses kommt es zu einer Änderung der Ionenkonzentration in der Ätzlösung, und als Folge davon sinkt der Widerstand der Ätzlösung im Verlauf des Ätzprozesses. Als weitere Möglichkeit zur Verfolgung der Schichtdicke der Titanfolie kann die Veränderung der Zusammensetzung der Ätzlösung während des Ätzvorgangs spektroskopisch erfasst werden. Hierzu können beispielsweise Indikatoren auf Säure oder Titanverbindungen zur Ätzlösung hinzugegeben werden, um so die jeweiligen Konzentrationen als Funktion der Zeit verfolgen zu können.

In Fig. 4C ist eine weitere Möglichkeit zur Durchführung des Ätzvorgangs dargestellt. Bei der in Fig. 4C gezeigten Variante wird vor dem Ätzen eine Trägerfolie 30 auf die Titanfolie 31 aufkaschiert, um die Stabilität der Titanfolie 31 zu verbessern und Knickstellen und andere mechanische Beschädigungen zu verhindern. Optional kann die Titanfolie 31 vor dem Aufkaschieren bereits auf der Seite, auf der die Trägerfolie 30 aufkaschiert wird, vorgeätzt sein. Zur Durchführung des Ätzvorgangs wird Flusssäure 32 oder ein Fluoridsalz-Säure-Gemisch 33 in einen Rahmen 34 gefüllt. Nachdem die Dicke der Titanfolie 31 auf die gewünschte Dicke verringert ist, kann die aufkaschierte Trägerfolie 30 mechanisch, chemisch oder thermisch von der Titanfolie 31 entfernt werden. Vorzugsweise wird die Trägerfolie 30 erst nach dem Transport des Elektronenstrahlfensters oder nach dem Einbau des Elektronenstrahlfensters in einen Elektronenstrahlbeschleuniger entfernt.

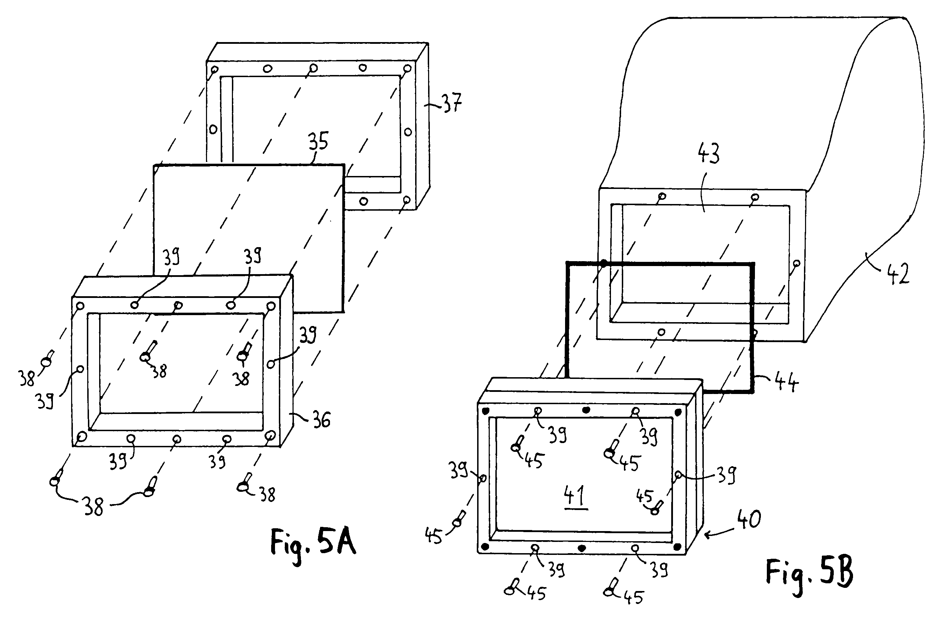

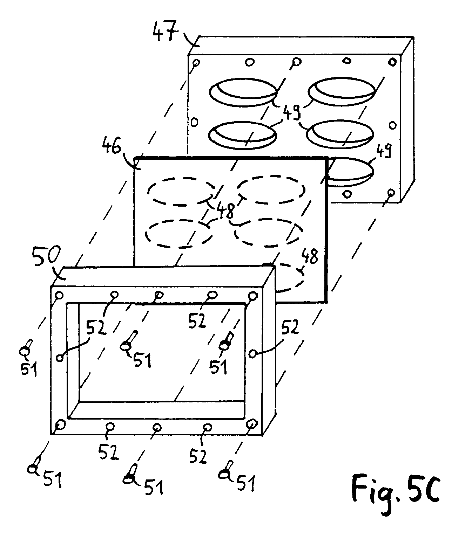

In Fig. 5A bis Fig. 5C ist dargestellt, wie eine geätzte Titanfolie zunächst in einen Rahmen eingespannt wird und der Rahmen mit der Titanfolie anschließend an einem Elektronenstrahlbeschleuniger angebracht wird. Fig. 5A zeigt, wie eine Titanfolie 35 zwischen einen ersten Rahmen 36 und einen zweiten Rahmen 37 eingelegt und durch Schrauben 38 fixiert wird. Bei der Titanfolie 35 kann es sich um eine Folie handeln, deren Dicke in einem vorhergehenden Ätzprozess verringert wurde. Alternativ dazu kann die Titanfolie 35 in der aus den Rahmen 36, 37 bestehenden Rahmeneinheit geätzt werden, wie dies in Fig. 4A veranschaulicht ist. Die Rahmen 36, 37 weisen zusätzliche Bohrlöcher 39 auf, mit denen die Rahmeneinheit an einem Elektronenstrahlbeschleuniger montiert werden kann.

In Fig. 5B ist dargestellt, wie die Rahmeneinheit 40 mit der darin eingespannten geätzten Titanfolie 41 an einem Elektronenstrahlbeschleuniger 42 angebracht wird. Hierzu wird die Rahmeneinheit 40 auf die Austrittsöffnung 43 des Elektronenstrahlbeschleunigers 42 aufgesetzt, aus der die Elektronen nach Durchlaufen der Beschleunigungsstrecke austreten. Da innerhalb des Elektronenstrahlbeschleunigers 42 ein Vakuum herrscht, kann es notwendig sein, ein Dichtungselement 44 zwischen die Rahmeneinheit 40 und den Elektronenstrahlbeschleuniger 42 einzusetzen. Über die zusätzlichen Bohrlöcher 39 kann die Rahmeneinheit 40 dann mit Hilfe von Schrauben 45 an der Austrittsöffnung 43 des Elektronenstrahlbeschleunigers 42 festgeschraubt werden.

Trotz ihrer geringen Dicke ist die Titanfolie 41 hinreichend stabil, um der Druckdifferenz zwischen dem Vakuum innerhalb des Elektronenstrahlbeschleunigers 42 und dem Atmosphärendruck außerhalb des Elektronenstrahlbeschleunigers 42 mechanisch standzuhalten. Wegen der geringen Dicke der als Elektronenaustrittsfenster dienenden Titanfolie 41 werden die beschleunigten Elektronen beim Durchdringen der Titanfolie 41 nur geringfügig abgeschwächt. Wegen des geringen Energieverlusts der Elektronen beim Durchdringen der Titanfolie 41 kann darüber hinaus die Beschleunigungsspannung des Elektronenstrahlbeschleunigers 43 verkleinert werden. Beispielsweise kann eine Beschleunigungsspannung von ca. 70 kV für viele Anwendungen ausreichend sein. Die Verringerung der Beschleunigungsspannung ermöglicht den Einsatz von kleineren und preisgünstigeren Transformatoren. Darüber hinaus führt die verringerte Beschleunigungsspannung zu einem geringeren Aufwand bei der Abschirmung der innerhalb des Elektronenstrahlbeschleunigers 42 entstehenden Röntgenstrahlung. Außerdem kann der Elektronenstrahlbeschleuniger bei Verwendung einer erfindungsgemäß hergestellten Titanfolie mit höhere Dosisleistung betrieben werden, weil die dünne Titanfolie weniger Elektronen absorbiert und sich deshalb auch weniger stark erhitzt.

In Fig. 5C ist eine weitere Ausführungsform der Erfindung gezeigt, bei der die Titanfolie 46 auf einer Stützkonstruktion 47 aufliegt. Durch die Stützkonstruktion 47 werden die freitragenden Bereiche der Titanfolie 46 verkleinert. Die durch den Druckunterschied zwischen innen und außen des Elektronenstrahlbeschleunigers auf die Titanfolie 46 wirkenden Druckkräfte werden daher durch die Stützkonstruktion 47 wesentlich reduziert. Die Stützkonstruktion 47 kann darüber hinaus zur Kühlung der Titanfolie 46 dienen. Hierzu können beispielsweise Kühlkanäle in die Stützkonstruktion 47 eingearbeitet sein, durch die Kühlflüssigkeit fließt. Auf diese Weise kann die durch Absorption von Strahlungsenergie entstehende Wärme abtransportiert werden.

Die in Fig. 5C gezeigte Titanfolie 46 kann entweder insgesamt geätzt werden oder aber selektiv nur an den Stellen 48 geätzt werden, wobei die Stellen 48 jeweils über den Aussparungen 49 der Stützkonstruktion 47 liegen. Eine Titanfolie 46 mit der in Fig. 5C gezeigten Art kann durch selektives Ätzen unter Verwendung einer entsprechenden Ätzmaske erzeugt werden. Dabei wirkt die Flusssäure bzw. das Fluoridsalz-Säure-Gemisch nur auf die Stellen 48 der Titanfolie 46 ein, so dass die Dicke der Titanfolie 46 lediglich an den Stellen 48 selektiv durch Ätzen verringert wird. Die restlichen Bereiche der Titanfolie 46 werden nicht geätzt, und insofern bleibt hier die ursprüngliche Dicke unverändert erhalten. Dadurch wird die mechanische Stabilität des so geschaffenen Elektronenaustrittsfensters erhöht.

Zum Einbau der partiell geätzten Titanfolie 46 in einen Elektronenstrahlbeschleuniger wird die Titanfolie 46 zwischen der Stützkonstruktion 47 und einem Rahmen 50 eingespannt. Der Rahmen 50 kann beispielsweise mit Schrauben 51 auf der Stützkonstruktion 47 angeschraubt werden. Anschließend kann die aus dem Rahmen 50, der Titanfolie 46 und der Stützkonstruktion 47 bestehende Fenstereinheit über die zusätzlichen Bohrlöcher 52 auf die in Fig. 5B gezeigte Austrittsöffnung 43 des Elektronenstrahlbeschleunigers 42 aufgeschraubt werden. Durch die Druckdifferenz zwischen innen und außen wird die Titanfolie 46 auf die Stützkonstruktion 47 gedrückt.

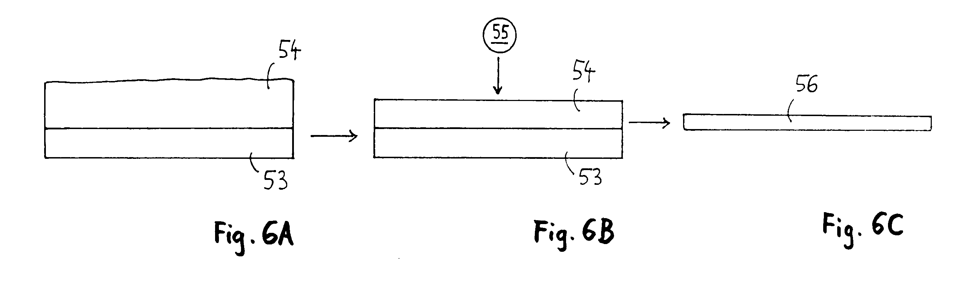

Bisher war beschrieben worden, wie durch Ätzen einer Titanfolie ein dünnes und dennoch stabiles Elektronenaustrittsfenster erzeugt werden kann. Entsprechend einer alternativen Ausführungsform der Erfindung wird anstelle der Titanfolie eine Glasfolie verwendet, deren Dicke durch Ätzen verringert wird. Bei Verwendung einer Glasfolie können als Ätzmittel ebenfalls Flusssäure sowie ein Fluoridsalz-Säure-Gemisch verwendet werden. Zur Erzeugung einer als Ausgangspunkt für den Ätzprozess geeigneten Glasfolie kann beispielsweise die Technik des thermischen Aufspritzens verwendet werden, die in Fig. 6A dargestellt ist. Hierzu wird auf einen Metallträger 53, der beispielsweise aus Aluminium bestehen kann, durch thermisches Aufspritzen eine Schicht 54 aus Glas, SiOₓ, SiO₂, Keramik, SiC, BN aufgebracht. Die Schichtdicke der aufgespritzten Schicht 54 wird anschließend durch mechanisches Schleifen und Polieren verringert. In einem darauf folgenden, in Fig. 6B gezeigten Schritt wird die Dicke der aufgespritzten Schicht 54 durch Behandeln mit einer Ätzlösung 55 weiter verringert. Anschließend kann der metallische Träger 53 entfernt werden, beispielsweise durch Ätzen mit einer Säure. Fig. 6C zeigt eine dünne Glasfolie 56, welche als Ergebnis dieser Bearbeitungsschritte erhalten wird. Die dünne Glasfolie 56 kann als Elektronenaustrittsfenster eines Elektronenstrahlbeschleunigers eingesetzt werden. Der Vorteil bei Verwendung von Glas oder SiO₂ als Fenstermaterial liegt in der geringen Dichte, die eine weitere Verringerung der Beschleunigungsspannung ermöglicht.

## Patentansprüche

1. Verfahren zur Herstellung eines Elektronenaustrittsfensters für einen Elektronenstrahlbeschleuniger, **gekennzeichnet durch**:
Verringern der Foliendicke einer Folie aus Titan oder Glas **durch** Ätzen der Folie mit einer Ätzlösung.

2. Verfahren nach Anspruch 1, **gekennzeichnet durch** mindestens einen der folgenden Schritte:
- Ätzen der Folie mit einer Säure oder Base;
- Ätzen der Folie mit einer sauren fluoridhaltigen Lösung;
- Ätzen der Folie mit Flusssäure;
- Ätzen der Folie mit Flusssäure, welche eine Konzentration zwischen 0,1 % und 10 % aufweist;
- Ätzen der Folie mit einem Gemisch aus einer Säure und einem Fluoridsalz;
- Ätzen der Folie mit einem Gemisch aus einer Säure und einem Fluoridsalz, wobei die jeweiligen Konzentrationen der Säure und des Fluoridsalzes zwischen 1 % und 10 % liegen.

3. Verfahren nach Anspruch 1 oder Anspruch 2, **gekennzeichnet durch** mindestens einen der folgenden Schritte:
- Reinigen und Entfetten der Folie vor dem Ätzen;
- Spülen der Folie nach dem Ätzen mit Natronlauge;
- Spülen der Folie nach dem Ätzen mit Wasser;
- Entfernen von nach dem Ätzen verbliebenen Verbindungen mit einer Lösung aus Schwefelsäure oder einem Gemisch aus Schwefelsäure und Wasserstoffperoxid.

4. Verfahren nach einem der Ansprüche 1 bis 3, **gekennzeichnet durch** Eintauchen der Folie zum Ätzen in ein Ätzbad mit Ätzlösung.

5. Verfahren nach einem der Ansprüche 1 bis 4, **gekennzeichnet durch** mindestens einen der folgenden Schritte:
- Fixieren der Folie in einem Rahmen;
- Ätzen der Folie **durch** Befüllen des Rahmens mit der Ätzlösung;
- Transportieren der Folie nach dem Ätzen mittels des Rahmens zu einem Elektronenstrahlbeschleuniger;
- Einbau des Rahmens mit der Folie in einen Elektronenstrahlbeschleuniger.

6. Verfahren nach einem der Ansprüche 1 bis 5, **gekennzeichnet durch** mindestens einen der folgenden Schritte:
- Verringern der Foliendicke der Folie **durch** gleichzeitiges Ätzen beider Seiten der Folie;
- Verringern der Foliendicke der Folie **durch** Ätzen einer ersten Seite und darauffolgendes Ätzen einer zweiten Seite der Folie;
- Verringern der Foliendicke der Folie **durch** Ätzen von nur einer Seite der Folie;
- Verringern der Foliendicke der gesamten Folie **durch** Ätzen;
- Verringern der Foliendicke der Folie an vorbestimmten Stellen **durch** selektives Ätzen an den vorbestimmten Stellen;
- Verringern der Foliendicke der Folie entsprechend den Aussparungen einer Stützkonstruktion, wobei die Folie an gestützten Stellen dick und stabil bleibt.

7. Verfahren nach einem der Ansprüche 1 bis 6, **gekennzeichnet durch** mindestens eines der folgenden Merkmale:
- die Folie ist mehr als 10 cm lang;
- die Folie ist mehr als 2 cm breit;
- die Dicke der Folie nach dem Ätzen wird **durch** die Einwirkzeit der Ätzlösung und die Konzentration der Ätzlösung bestimmt.

8. Verfahren nach einem der Ansprüche 1 bis 7, **dadurch gekennzeichnet, dass** es sich bei der Folie um eine Titanfolie handelt.

9. Verfahren nach Anspruch 8, **gekennzeichnet durch** eines oder mehrere der folgenden Merkmale:
- die anfängliche Foliendicke der Titanfolie beträgt zwischen 7 µm und 35 µm;
- nach Beendigung des Ätzens beträgt die Foliendicke der Titanfolie zwischen 1 µm und 9 µm.

10. Verfahren nach Anspruch 8 oder Anspruch 9, **gekennzeichnet durch** mindestens einen der folgenden Schritte:
- Entfernen einer Oxidschicht der Titanfolie **durch** Ätzen mit Flusssäure oder mit einem Gemisch aus Flusssäure und einem Fluoridsalz;
- Verringern der Dicke der Titanfolie nach Entfernen einer Oxidschicht der Titanfolie **durch** Ätzen mit einer der folgenden Ätzlösungen: Salzsäure, Schwefelsäure, Flusssäure, ein Gemisch aus einer Säure und einem Fluoridsalz;
- Überwachen der Foliendicke der Titanfolie **durch** mindestens eines der folgenden Verfahren: Messen des elektrischen Widerstands der Titanfolie, Messen des elektrischen Widerstands der Ätzlösung, spektrometrisches Bestimmen der Konzentration mittels Indikatoren auf Säure oder Titanverbindungen.

11. Verfahren nach einem der Ansprüche 1 bis 7, **dadurch gekennzeichnet, dass** es sich bei der Folie um eine Glasfolie handelt.

12. Verfahren nach Anspruch 11, **dadurch gekennzeichnet, dass** die Glasfolie erzeugt wird durch
thermisches Aufspritzen, Aufschmelzen oder Aufgießen einer Glasschicht auf einen Metallträger oder Aufkleben einer Glasplatte auf einen Metallträger.

13. Verfahren nach Anspruch 12, **gekennzeichnet durch**:
Abschleifen oder Abpolieren oder Elektropolieren der Glasschicht vor dem Ätzen bis auf eine Dicke zwischen 8 µm und 50 µm.

14. Verfahren nach einem der Ansprüche 11 bis 13, **gekennzeichnet durch** Verringern der Dicke der Glasfolie oder Glasschicht **durch** Ätzen mit Flusssäure oder mit einem Gemisch aus einer Säure und einem Fluoridsalz.

15. Verfahren nach einem der Ansprüche 1 bis 14, **gekennzeichnet durch** Einbauen der Folie nach dem Ätzen in einen Elektronenstrahlbeschleuniger.

16. Elektronenaustrittsfenster, welches gemäß dem Verfahren nach einem der Ansprüche 1 bis 15 hergestellt ist.

17. Elektronenstrahlbeschleuniger, welcher aufweist
- eine Kathode oder einen Glühfaden,
- eine Beschleunigungsanode,
- eine Hochspannungsquelle zur Erzeugung einer Beschleunigungsspannung, die zwischen der Kathode und der Beschleunigungsanode anliegt,
- ein Elektronenaustrittsfenster, welches gemäß einem der Ansprüche 1 bis 15 hergestellt ist.

18. Elektronenstrahlbeschleuniger nach Anspruch 17, **dadurch gekennzeichnet, dass** die Beschleunigungsspannung kleiner oder gleich 70 kV ist.

19. Elektronenstrahlbeschleuniger nach Anspruch 17 oder Anspruch 18, **dadurch gekennzeichnet, dass** der Elektronenstrahlbeschleuniger zur Elektronenstrahlhärtung von Lacken, Beschichtungsmaterialien, Druckfarben, Klebstoffen und zur Nachvernetzung von Kunststoffen eingesetzt wird.
